# EUROPEAN PATENT APPLICATION

(11) **EP 4 637 112 A1**
(43) Date of publication of application: **22.10.2025**
(21) Application number: 23917239.8
(22) Date of filing: 04.12.2023
(51) Int. Cl.: H04L 67/10

(54) **DISTRIBUTED CLUSTER SYSTEM AND RELATED LONG LATENCY REQUEST PROCESSING METHOD**

(30) Priority: 19.01.2023 CN 202310090385
(71) Applicant: Huawei Technologies Co., Ltd., Shenzhen, Guangdong 518129 (CN)
(72) Inventor: ZHAO, Ziyu, Shenzhen, Guangdong 518129 (CN); CHENG, Chuanning, Shenzhen, Guangdong 518129 (CN); MIN, Wenbin, Shenzhen, Guangdong 518129 (CN); WU, Wenyu, Shenzhen, Guangdong 518129 (CN)
(74) Representative: Körber, Martin Hans
(86) International application number: PCT/CN2023/136245
(87) International publication number: WO 2024/152771

(57) **Abstract**

Embodiments of this application disclose a distributed cluster system and a related long-latency request processing method. The distributed cluster system includes a plurality of computing nodes, and each computing node includes a processing unit and a detection unit. A processing unit of a first computing node is configured to send a first request to a second computing node, and a detection unit of the first computing node is configured to: when the first request times out, send a first message to the processing unit of the first computing node. The first message includes one or more of long-latency timeout information and blocked path information. When a response time of the second computing node to the first request is greater than a first threshold, the first request times out. The first threshold is determined based on a plurality of response times, and the plurality of response times are respectively response times of the second computing node to a plurality of requests that have been sent by the first computing node. According to embodiments of this application, a waste of computing resources of the computing node can be avoided, to improve utilization of the computing node.

## Description

This application claims priority to Chinese Patent Application No. 202310090385.4, filed with the China National Intellectual Property Administration on January 19, 2023 and entitled "DISTRIBUTED CLUSTER SYSTEM AND RELATED LONG-LATENCY REQUEST PROCESSING METHOD", which is incorporated herein by reference in its entirety.

### TECHNICAL FIELD

This application relates to the field of computer technologies, and in particular, to a distributed cluster system and a related long-latency request processing method.

### BACKGROUND

With development of science and technology, a high-performance computer technology constructed based on a cluster architecture is increasingly mature, and is widely applied. Therefore, a distributed cluster system has been greatly developed in terms of computing performance and system scale. Currently, a distributed cluster system (for example, a server cluster) may include a plurality of computing nodes, and different computing nodes may be connected to each other via an interconnection network, to implement communication between the nodes. However, as a quantity of computing nodes in the distributed cluster system increases, a networking scale becomes larger. When a computing node accesses a remote computing node or the system is severely congested, a request initiated by the computing node cannot be quickly responded to. In this case, the computing node needs to wait for a response to the request before performing computing or another action. The computing node cannot perform computing or another action while waiting, resulting in a serious waste of computing resources of the computing node.

Therefore, how to provide a long-latency request processing method to avoid a waste of computing resources of the computing node and improve utilization of the computing node is an urgent problem to be resolved.

### SUMMARY

A technical issue to be addressed by embodiments of this application is how to provide a distributed cluster system and a related long-latency request processing method, to avoid a waste of computing resources of a computing node and improve utilization of the computing node.

According to a first aspect, an embodiment of this application provides a distributed cluster system. The distributed cluster system includes a plurality of computing nodes, and each of the plurality of computing nodes includes a processing unit and a detection unit. A processing unit of a first computing node is configured to: send a first request to a second computing node. The first computing node and the second computing node are any two of the plurality of computing nodes.

The detection unit of the first computing node is configured to: when the first request times out, send a first message to the processing unit of the first computing node. The first message includes one or more of long-latency timeout information and blocked path information.

When a first response time of the second computing node to the first request is greater than a first threshold, the first request times out. The first threshold is determined based on a plurality of response times, and the plurality of response times are respectively response times of the second computing node to a plurality of requests that have been sent by the first computing node.

In a large networking system, when the first computing node accesses a remote computing node or the system is severely congested, the second computing node cannot quickly respond to the request initiated by the first computing node. Currently, the first computing node needs to wait for a response to the request before performing computing or another action. The first computing node cannot perform computing or another action while waiting, resulting in a serious waste of computing resources of the first computing node.

In embodiments of this application, the detection unit may be added to the first computing node, and may be configured to detect whether the request times out. Specifically, from a moment at which the processing unit of the first computing node sends the first request, the detection unit starts to monitor a receiving moment of the response. When the response time of the first request exceeds a normal response time (namely, the first threshold) of the second computing node, it may be determined that the first request times out, and the detection unit may actively send the first message to the processing unit of the first computing node, to notify the processing unit that the path is blocked and the second computing node cannot quickly respond to the request. Further, the processing unit of the first computing node may first switch to another thread to process another task. This prevents the first computing node from being in a waiting state for a long time because the processing unit of the first computing node cannot sense whether the request times out, and from seriously wasting computing resources of the first computing node. Therefore, utilization of the computing node is improved.

In some embodiments, the processing unit of the first computing node is specifically configured to send the first request to the second computing node using a first thread, and the processing unit of the first computing node is further configured to receive the first message, and suspend the first thread.

In embodiments of this application, the processing unit of the first computing node may run the first thread, and may send the first request to the second computing node using the first thread. If the detection unit of the first computing node detects that the request times out, the detection unit actively sends the first message to the processing unit. After receiving the first message, the processing unit does not immediately stop the thread, but may first suspend the first thread. Then, the processing unit of the first computing node may first switch to another thread to process another task. This prevents the first computing node from seriously wasting computing resources of the first computing node due to being in a waiting state for a long time. Therefore, utilization of the computing node is improved.

In some embodiments, the detection unit of the first computing node is specifically configured to: after the first computing node sends the first request, monitor a receiving moment of a first response, where the first response is sent by the second computing node to the first computing node for the first request; and when a difference between a second moment and a first moment is greater than the first threshold, determine that the first request times out, where the first moment is the moment at which the first request is sent, the second moment is any moment after the first moment and before the receiving moment, and the difference between the second moment and the first moment is less than or equal to the first response time.

In embodiments of this application, the difference between the second moment and the first moment may be understood as a monitoring time of the detection unit, or may be understood as a waiting time of the processing unit. The time is less than or equal to the response time of the request. Therefore, from the moment at which the processing unit of the first computing node sends the first request, the detection unit starts to monitor the receiving moment of the response; and when the detection time is greater than the first threshold, which may be understood as that the response time of the first request exceeds the normal response time (namely, the first threshold) of the second computing node, determines that the first request times out. Because the first threshold is determined based on an actual response time of the second computing node, the first threshold is closer to the normal response time of the second computing node, to more accurately determine whether the request times out. This prevents the first computing node from seriously wasting computing resources of the first computing node due to being in a waiting state for a long time. Therefore, utilization of the computing node is improved.

In some embodiments, the detection unit of the first computing node is further configured to determine a difference between the receiving moment and the first moment as the first response time, and update the first threshold based on the first response time.

In embodiments of this application, after the detection unit of the first computing node detects that the first request times out, the detection unit not only sends the first message to the processing unit, but also continues to monitor the receiving moment of the response, to determine the first response time (namely, the difference between the receiving moment of the first response and the sending moment of the first request). Further, the first threshold is updated based on the first response time, so that the first threshold is closer to the normal response time of the second computing node, and whether the request times out can be subsequently determined more accurately. This prevents the first computing node from seriously wasting computing resources of the first computing node due to being in a waiting state for a long time. Therefore, utilization of the computing node is improved.

In some embodiments, the detection unit of the first computing node is specifically configured to: when the first response time is greater than a preset value, decrease the first threshold, where the preset value is determined based on the first threshold that is not updated; and when the first response time is less than or equal to the preset value, increase the first threshold.

In embodiments of this application, when the actual response time (namely, the first response time) of the second computing node is greater than the preset value, the first threshold may be appropriately decreased, and a quantity of replies to the first message may be increased. When the actual response time (namely, the first response time) of the second computing node is less than or equal to the preset value, the first threshold may be appropriately increased, and the quantity of replies to the first message may be decreased. The first threshold corresponding to the second computing node may be dynamically adjusted based on the actual response time of the second computing node, so that the first threshold may gradually approach the normal response time of the second computing node, and whether the request times out can be subsequently determined more accurately. This prevents the first computing node from seriously wasting computing resources of the first computing node due to being in a waiting state for a long time. Therefore, utilization of the computing node is improved.

In some embodiments, the processing unit of the first computing node is further configured to: after receiving the first response, store, in the first computing node, first data included in the first response. The processing unit of the first computing node is further configured to: when re-running the first thread, read the first data from the first computing node.

In embodiments of this application, because the processing unit of the first computing node does not stop the thread after receiving the first message, the second computing node still returns the response. When the second computing node returns the response, the processing unit of the first computing node may currently run another task. Therefore, the first data (namely, to-be-accessed data in the first request) in the response may be stored locally in the first computing node, for example, stored in a cache of the first computing node. After stopping the another task, the processing unit of the first computing node may re-run the first thread. Further, the first computing node may directly read related data from the cache, and does not need to access the second computing node.

According to a second aspect, this application provides a long-latency request processing method, applied to a distributed cluster system. The distributed cluster system includes a plurality of computing nodes, and each of the plurality of computing nodes includes a processing unit and a detection unit. The method includes: A processing unit of a first computing node sends a first request to a second computing node, where the first computing node and the second computing node are any two of the plurality of computing nodes. When the first request times out, a detection unit of the first computing node sends a first message to the processing unit of the first computing node. The first message includes one or more of long-latency timeout information and blocked path information. When a first response time of the second computing node to the first request is greater than a first threshold, the first request times out. The first threshold is determined based on a plurality of response times, and the plurality of response times are respectively response times of the second computing node to a plurality of requests that have been sent by the first computing node.

In some embodiments, sending the first request to the second computing node includes: sending the first request to the second computing node using a first thread. The method further includes: The processing unit of the first computing node receives the first message, and suspends the first thread.

In some embodiments, that the first request times out when the first response time of the second computing node to the first request is greater than the first threshold includes: After the first computing node sends the first request, the detection unit of the first computing node monitors a receiving moment of a first response, where the first response is sent by the second computing node to the first computing node for the first request; and when a difference between a second moment and a first moment is greater than the first threshold, determines that the first request times out, where the first moment is a moment at which the first request is sent, the second moment is any moment after the first moment and before the receiving moment, and the difference between the second moment and the first moment is less than or equal to the first response time.

In some embodiments, the method further includes: The detection unit of the first computing node determines a difference between the receiving moment and the first moment as the first response time, and updates the first threshold based on the first response time.

In some embodiments, updating the first threshold based on the first response time includes: when the first response time is greater than a preset value, decreasing the first threshold, where the preset value is determined based on the first threshold that is not updated; and when the first response time is less than or equal to the preset value, increasing the first threshold.

In some embodiments, the method further includes: After receiving the first response, the processing unit of the first computing node stores, in the first computing node, first data included in the first response; and when re-running the first thread, reads the first data from the first computing node.

According to a third aspect, this application provides a computer storage medium. The computer storage medium stores a computer program, and when the computer program is executed by a processor, the method in any item of the second aspect is implemented.

According to a fourth aspect, this application provides a chip system. The chip system includes a processor, configured to support an electronic device in implementing functions in the second aspect, for example, generating or processing information in the long-latency request processing method. In a possible design, the chip system further includes a memory, and the memory is configured to store program instructions and data that are necessary for the electronic device. The chip system may include a chip, or may include a chip and another discrete component.

According to a fifth aspect, this application provides a computer program. The computer program includes instructions, and when the computer program is executed by a computer, the computer is enabled to perform the method in any item of the second aspect.

### BRIEF DESCRIPTION OF DRAWINGS

FIG. 1 is a diagram of a distributed cluster system according to an embodiment of the present invention;
FIG. 2 is a diagram of a structure of a computing node according to an embodiment of the present invention;
FIG. 3 is a diagram of a structure of a distributed cluster system according to an embodiment of this application;
FIG. 4 is a diagram of interaction between a first computing node and a second computing node according to an embodiment of this application;
FIG. 5 is a diagram in which a first computing node sends a request according to an embodiment of this application;
FIG. 6 is a diagram in which a first computing node detects that a request times out according to an embodiment of this application;
FIG. 7 is a diagram of a request entry according to an embodiment of this application;
FIG. 8 is a diagram of a score table according to an embodiment of this application;
   and
FIG. 9 is a flowchart of a long-latency request processing method according to an embodiment of this application.

### DESCRIPTION OF EMBODIMENTS

The following describes embodiments of this application with reference to accompanying drawings in embodiments of this application.

In the specification, claims, and the accompanying drawings of this application, terms such as "first", "second", "third", and "fourth" are intended to distinguish between different objects but do not describe a particular order. In addition, terms "include", "have", and any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned in the specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

Based on the technical problems proposed above, for ease of understanding of embodiments of the present invention, the following first describes a system architecture on which embodiments of the present invention are based.

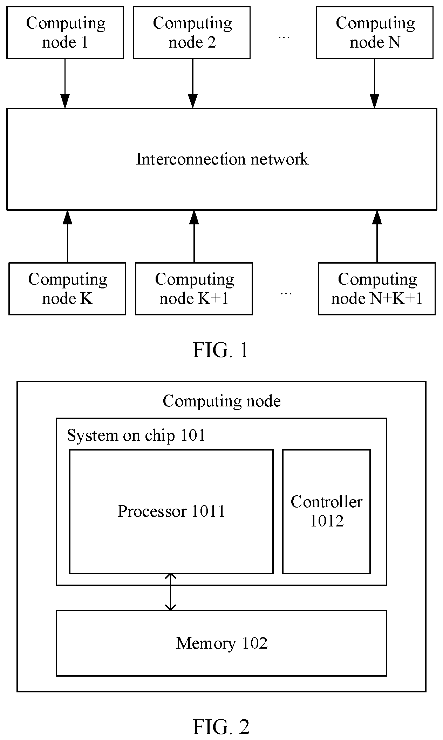

FIG. 1 is a diagram of a distributed cluster system according to an embodiment of the present invention. The system may include a plurality of computing nodes, and different computing nodes may be connected to each other via an interconnection network, to implement communication between different nodes. For example, in the distributed cluster system, different computing nodes may share a memory, that is, one computing node may access a memory of another computing node via an interconnection network. The system may be a large-scale processor cluster like a high-performance computer cluster (High Performance Computing, HPC), and the computing node may be a device like a host or a server. Then, the computing node in the distributed cluster system is described. FIG. 2 is a diagram of a structure of a computing node according to an embodiment of the present invention. The computing node in the figure may include but is not limited to a system on chip (System on chip, SOC) 101 and a memory 102, the system on chip 101 may include but is not limited to a processor (central processing unit, CPU) 1011 and a controller 1012. It may be understood that the computing node may further include all physical components on an application processing side, for example, a storage, a power supply, another input/output controller, and an interface that are not shown in FIG. 2.

The processor 1011 of the computing node may run an operating system, a file system (for example, a flash file system F2FS), an application program, or the like, to control a plurality of hardware or software elements connected to the processor 1011, and may process various data and perform operations. The processor 1011 may load, to the memory 102, instructions or data stored in a storage, and invoke, to the processor 1011 for operation, instructions or data that needs to be operated. After the operation is completed, the processor 1011 then temporarily stores a result in the memory 102, and stores, in the storage by using the controller 1012, instructions or data that needs to be stored for a long time. The processor 1011 may include one or more processing units (which may also be referred to as processing cores). For example, the processor 1011 may include one or more of a central processing unit (CPU), an application processing unit (application processor, AP), a modem processing unit, a graphics processing unit (graphics processing unit, GPU), an image signal processing unit (image signal processor, ISP), a video codec unit, a digital signal processing unit (digital signal processor, DSP), a baseband processing unit, and a neural network processing unit (neural-network processing unit, NPU). Different processing units may be independent components, or may be integrated into one or more components.

In some embodiments, a memory may be further disposed in the processor 1011 of the computing node, and is configured to store instructions and data. The memory of the processor 1011 is a cache (Cache), and may be usually classified into a level 1 cache (L1 Cache), a level 2 cache (L2 Cache), a level 3 cache (L3 Cache), and the like. The cache may store instructions or data that is just used or cyclically used by the processor 1011. If the processor 1011 needs to use the instructions or the data again, the processor 1011 may directly invoke the instructions or the data from the cache. This avoids repeated access and reduces a waiting time of the processor 1011, to improve system efficiency.

In the distributed cluster system, different computing nodes may share the memory, that is, one computing node may access a memory of another computing node via the interconnection network. Therefore, the processor 1011 may access the memory of the another computing node via the interconnection network, and may place accessed data in the cache, to quickly access data, and improve a processing speed of the processor 1011. Currently, as a quantity of computing nodes in the distributed cluster system increases, a networking scale becomes larger, and congestion may occur at any time due to a factor like a distance between nodes and a complex network. When a computing node accesses a remote computing node or the system is severely congested, an access request initiated by the computing node cannot be quickly responded to. In this case, the computing node needs to wait for a response to the request before performing computing or another action. The computing node cannot perform computing or another action while waiting, resulting in a serious waste of computing resources of the computing node. To resolve the foregoing problems, this application provides a long-latency request processing method based on the distributed cluster system, to avoid a waste of computing resources of a computing node, so as to improve utilization of the computing node. Details are described subsequently.

The memory 102 of the computing node is usually a volatile memory, and content stored in the memory 102 is lost when power is off. The memory 102 may also be referred to as a memory (Memory) or a main memory. The memory 102 in this application includes a readable and writable running memory, configured to: temporarily store operation data of the processor 1011, and interact with the storage. The memory 102 may serve as a storage medium for temporary data of an operating system or another running program. For example, an operating system running on the processor 1011 invokes data that needs to be operated from the memory 102 to the processor 1011 for operation. After the operation is completed, the processor 1011 transfers a result. The memory 102 may include one or more of a dynamic random access memory (DRAM), a static random access memory (SRAM), a synchronous dynamic random access memory (SDRAM), and the like. The DRAM includes a double data rate synchronous dynamic random access memory (Double Data Rate Synchronous Dynamic Random Access Memory, DDR SDRAM, DDR for short), a double data rate 2 (DDR2) synchronous dynamic random access memory, a double data rate 3 (DDR3) synchronous dynamic random access memory, a low power double data rate 4 (Low Power Double Data Rate 4, LPDDR4) synchronous dynamic random access memory, a low power double data rate 5 (Low Power Double Data Rate 5, LPDDR5) synchronous dynamic random access memory, and the like.

It may be understood that the system architecture in FIG. 1 is merely some example implementations provided in embodiments of the present invention. The system architecture in embodiments of the present invention includes but is not limited to the foregoing implementations.

The following describes embodiments of this application with reference to the accompanying drawings.

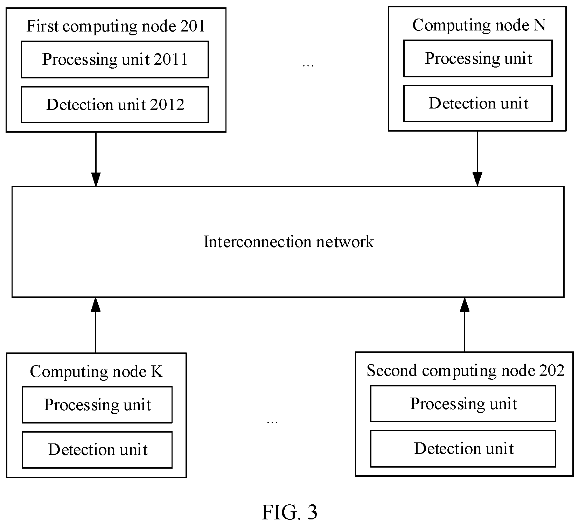

In embodiments of this application, the computing node in the distributed cluster system in FIG. 1 may be improved, to resolve severe blocking and a resource waste caused by an ultra-long-delay request to the computing node in a large networking system. FIG. 3 is a diagram of a structure of a distributed cluster system according to an embodiment of this application. The following describes the distributed cluster system in embodiments of this application in detail with reference to FIG. 3. The distributed cluster system includes a plurality of computing nodes, and each of the plurality of computing nodes includes a processing unit and a detection unit. In FIG. 3, a first computing node 201 and a second computing node 202 may be any two of the plurality of computing nodes. Detailed descriptions are as follows:

A processing unit 2011 of the first computing node 201 is configured to send a first request to the second computing node 202.

Specifically, the computing node in the distributed cluster system may be a device like a host or a server. The first computing node 201 may be understood as a device for sending a request, and the second computing node 202 may be understood as a device for responding to a request. The processing unit of the computing node may be a processing core (which may also be referred to as a processing unit) in the processor 1011 in FIG. 2. The first request may be understood as a read request initiated by the first computing node 201, and the first request may include but is not limited to address information of to-be-accessed data and the like.

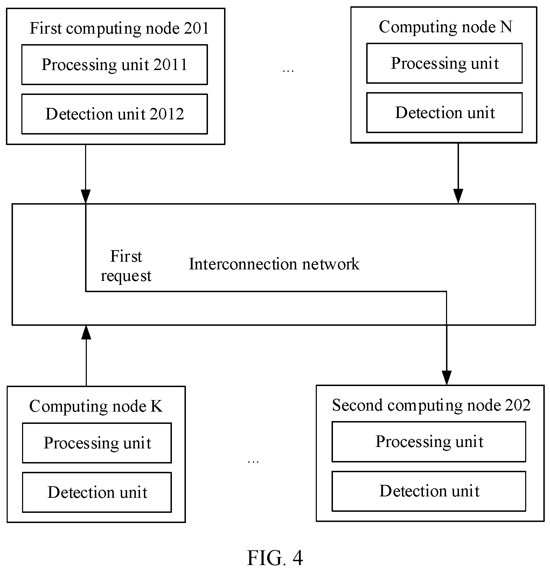

For example, FIG. 4 is a diagram of interaction between a first computing node and a second computing node according to an embodiment of this application. In the figure, when the processing unit 2011 of the first computing node 201 needs to invoke data stored in the second computing node 202 during running, the first computing node 201 may send the read request (which may be understood as the foregoing first request) to the second computing node 202 via the interconnection network, to obtain the data stored in the second computing node 202.

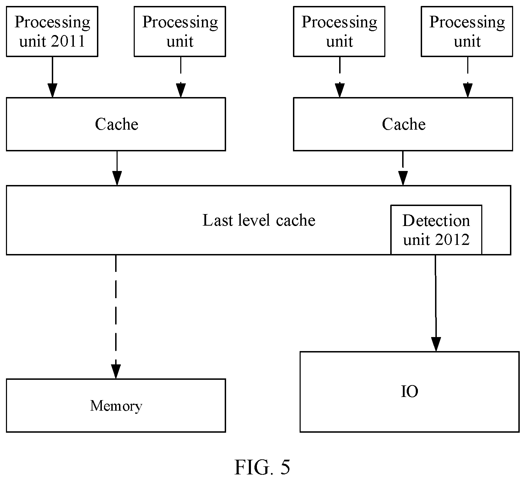

It should be noted that FIG. 5 is a diagram in which a first computing node sends a request according to an embodiment of this application. In the figure, the first computing node 201 may include one or more processing units, a cache (which may include a level 1 cache, a level 2 cache, a last level cache, and the like), a memory (memory), an input/output (Input/Output, I/O) path, a detection unit 2012, and the like. The processing unit 2011 of the first computing node 201 may initiate the first request. The first request may include but is not limited to the address information of the to-be-accessed data and the like. First, the processing unit 2011 may check, based on the address information of the to-be-accessed data in the first request, whether the corresponding data exists in the cache. If the corresponding data exists in the cache, the request results in a cache hit, and the processing unit 2011 reads the data from the cache. If the corresponding data does not exist in the cache, the first computing node 201 may send the first request to the second computing node 202 through the input/output path, to obtain the required data.

The detection unit 2012 of the first computing node 201 is configured to: when the first request times out, send a first message to the processing unit 2011 of the first computing node 201.

The first message includes one or more of long-latency timeout information and blocked path information. When a first response time of the second computing node 202 to the first request is greater than a first threshold, the first request times out. The first threshold is determined based on a plurality of response times, and the plurality of response times are respectively response times of the second computing node 202 to a plurality of requests that have been sent by the first computing node 201.

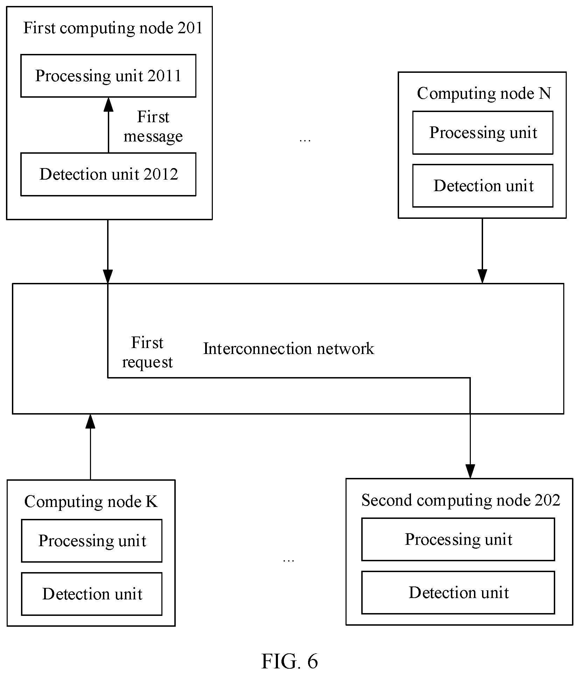

Specifically, in the large networking system, when the first computing node 201 accesses a remote computing node or the system is severely congested, the second computing node 202 cannot quickly respond to the request initiated by the first computing node 201. In this case, the first computing node 201 needs to wait for a response to the request before performing computing or another action. The first computing node 201 cannot perform computing or another action while waiting, resulting in a serious waste of computing resources of the first computing node 201. Therefore, in embodiments of this application, the detection unit 2012, which may also be referred to as a long-latency detection module, may be added to the first computing node 201, to monitor a receiving moment of the response. FIG. 6 is a diagram in which a first computing node detects that a request times out according to an embodiment of this application. In the figure, from a moment at which the processing unit 2011 of the first computing node 201 sends the first request, the detection unit 2012 starts to monitor a receiving moment of a first response (the first response is sent by the second computing node 202 to the first computing node 201 for the first request). When detecting that the first request times out, the detection unit 2012 may actively send the first message to the processing unit 2011 of the first computing node 201. The first message may include but is not limited to the long-latency timeout information, the blocked path information, and the like, to notify the processing unit 2011 that the path is blocked and the second computing node 202 cannot quickly respond to the request. Further, the processing unit 2011 of the first computing node 201 may first switch to another thread to process another task. This prevents the first computing node 201 from seriously wasting computing resources of the first computing node 201 due to being in a waiting state for a long time. Therefore, utilization of the computing node is improved.

The following describes how the detection unit 2012 of the first computing node 201 determines whether the request times out. The details are as follows:
In some embodiments, the detection unit 2012 of the first computing node 201 is specifically configured to: after the first computing node 201 sends the first request, monitor a receiving moment of a first response, where the first response is sent by the second computing node 202 to the first computing node 201 for the first request; and when a difference between a second moment and a first moment is greater than the first threshold, determine that the first request times out, where the first moment is the moment at which the first request is sent, the second moment is any moment after the first moment and before the receiving moment, and the difference between the second moment and the first moment is less than or equal to the first response time.

Specifically, the difference between the second moment and the first moment may be understood as a monitoring time of the detection unit 2012, or may be understood as a waiting time of the processing unit 2011. The time is less than or equal to the response time of the request. Therefore, from the moment at which the processing unit 2011 of the first computing node 201 sends the first request, the detection unit 2012 starts to monitor the receiving moment of the first response (the first response is sent by the second computing node 202 to the first computing node 201 for the first request); and when the detection time is greater than the first threshold, which may be understood as that the response time of the first request exceeds a normal response time (namely, the first threshold) of the second computing node 202, determines that the first request times out. It may also be understood that, from the moment at which the processing unit 2011 of the first computing node 201 sends the first request, the detection unit 2012 starts to keep a waiting time of the processing unit 2011; and when a time kept (namely, the waiting time of the processing unit 2011) exceeds the normal response time (namely, the first threshold) of the second computing node 202, determines that the first request times out.

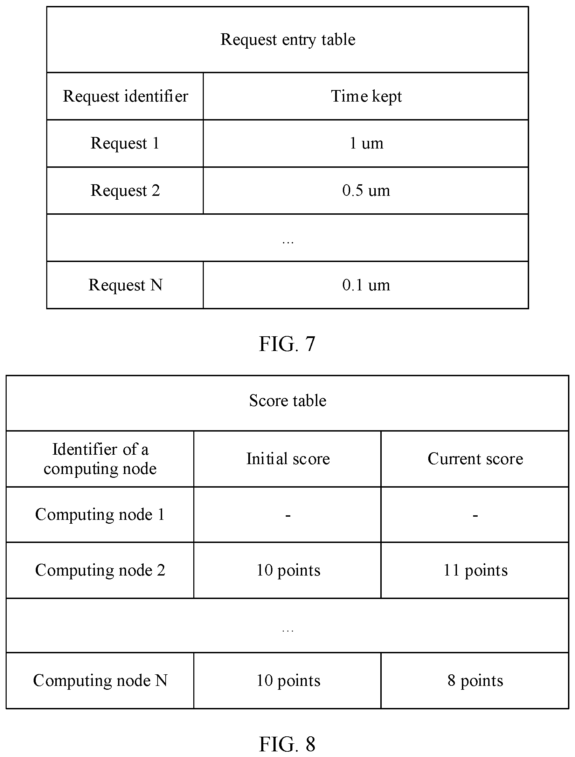

In some embodiments, FIG. 7 is a diagram of a request entry according to an embodiment of this application. In the figure, the detection unit 2012 of the first computing node 201 may record a request entry table, where the request entry table may record a plurality of request identifiers and a time kept (which may be understood as a waiting time of the processing unit 2011) corresponding to each request identifier; and when the time kept is greater than the first threshold, determine that the request times out. It should be noted that the first computing node 201 sends the plurality of requests, and different destination ends correspond to different thresholds.

It should be emphasized that the first threshold is determined based on the plurality of response times, and the plurality of response times are respectively the response times of the second computing node 202 to the plurality of requests that have been sent by the first computing node 201.

Specifically, before sending the first request to the second computing node 202, the first computing node 201 may send the plurality of requests to the second computing node 202, and determine, based on actual response times of the plurality of requests, the first threshold corresponding to the second computing node 202. Because the first threshold is determined based on an actual response time of the second computing node 202, the first threshold is closer to the normal response time of the second computing node 202.

In some embodiments, the detection unit 2012 may record a score table. FIG. 8 is a diagram of a score table according to an embodiment of this application. In the figure, the score table may record an identifier of the computing node, and an initial score and a current score that correspond to each computing node. The following is described by using an example in which the first computing node 201 is a computing node 1 and the second computing node 202 is a computing node 2. The computing node 1 may first set an initial score (for example, 10 points) and an initial first threshold for the computing node 2. Each time the computing node 1 sends a request to the computing node 2, the computing node 1 scores the computing node 2. Specifically, when the actual response time of the computing node 2 is greater than or equal to the preset value, the score is increased by 1. When the actual response time of the computing node 2 is less than the preset value, the score is decreased by 1. The preset value may be an integer multiple of the initial first threshold. Further, when the current score of the computing node 2 is greater than the initial score, the first threshold may be appropriately decreased, and a quantity of replies to the first message may be increased. When the current score of the computing node 2 is less than the initial score, the first threshold may be appropriately increased, and the quantity of replies to the first message may be decreased. Because the first threshold corresponding to the computing node 2 may be dynamically adjusted based on the actual response time of the computing node 2, the first threshold is closer to the normal response time of the computing node 2.

In some embodiments, the detection unit 2012 of the first computing node 201 is further configured to determine a difference between the receiving moment and the first moment as the first response time, and update the first threshold based on the first response time.

Specifically, after the detection unit 2012 of the first computing node 201 detects that the first request times out, the detection unit 2012 not only sends the first message to the processing unit 2011, but also continues to monitor the receiving moment of the first response, to determine the first response time (namely, the difference between the receiving moment of the first response and the sending moment of the first request). Further, the first threshold is updated based on the first response time, so that the first threshold is closer to the normal response time of the second computing node 202.

In some embodiments, the detection unit 2012 of the first computing node 201 is specifically configured to: when the first response time is greater than a preset value, decrease the first threshold, where the preset value is determined based on the first threshold that is not updated; and when the first response time is less than or equal to the preset value, increase the first threshold.

Specifically, when the actual response time (namely, the first response time) of the second computing node 202 is greater than the preset value, the first threshold may be appropriately decreased, and the quantity of replies to the first message may be increased. When the actual response time (namely, the first response time) of the second computing node 202 is less than or equal to the preset value, the first threshold may be appropriately increased, and the quantity of replies to the first message may be decreased. The preset value may be an integer multiple of the first threshold that is not updated. Because the first threshold corresponding to the second computing node 202 may be dynamically adjusted based on the actual response time of the second computing node 202, the first threshold may gradually approach the normal response time of the second computing node 202.

In some embodiments, the processing unit 2011 of the first computing node 201 is specifically configured to send the first request to the second computing node 202 using a first thread, and the processing unit 2011 of the first computing node 201 is further configured to receive the first message, and suspend the first thread.

Specifically, the processing unit 2011 of the first computing node 201 may run the first thread, and may send the first request to the second computing node 202 using the first thread. If the detection unit 2012 of the first computing node 201 detects that the request times out, the detection unit 2012 actively sends the first message to the processing unit 2011. After receiving the first message, the processing unit 2011 does not immediately stop the thread, but may first suspend the first thread. Then, the processing unit 2011 of the first computing node 201 may first switch to another thread to process another task. This prevents the first computing node 201 from seriously wasting computing resources of the first computing node 201 due to being in a waiting state for a long time. Therefore, utilization of the computing node is improved.

In some embodiments, the processing unit 2011 of the first computing node 201 is further configured to: after receiving the first response, store, in the first computing node 201, first data included in the first response. The processing unit 2011 of the first computing node 201 is further configured to: when re-running the first thread, read the first data from the first computing node 201.

Specifically, because the processing unit 2011 of the first computing node 201 does not stop the thread after receiving the first message, the second computing node 202 still returns the first response. When the second computing node 202 returns the response, the processing unit 2011 of the first computing node 201 may currently run another task. Therefore, the first data (namely, the to-be-accessed data in the first request) in the first response may be stored locally in the first computing node 201, for example, stored in a cache of the first computing node 201. After stopping the another task, the processing unit 2011 of the first computing node 201 may re-run the first thread. Further, the first computing node 201 may directly read related data from the cache, and does not need to access the second computing node 202.

In conclusion, in this application, the detection unit may be added to the first computing node, and may be configured to detect whether the request times out. Specifically, from the moment at which the processing unit of the first computing node sends the first request, the detection unit starts to monitor the receiving moment of the response. When the response time of the first request exceeds the normal response time (namely, the first threshold) of the second computing node, it may be determined that the first request times out, and the detection unit may actively send the first message to the processing unit of the first computing node, to notify the processing unit that the path is blocked and the second computing node cannot quickly respond to the request. Further, the processing unit of the first computing node may first switch to another thread to process another task. This prevents the first computing node from being in a waiting state for a long time because the processing unit of the first computing node cannot sense whether the request times out, and from seriously wasting computing resources of the first computing node. Therefore, utilization of the computing node is improved.

The foregoing describes the distributed cluster system in embodiments of this application in detail. The following provides a related method in embodiments of this application.

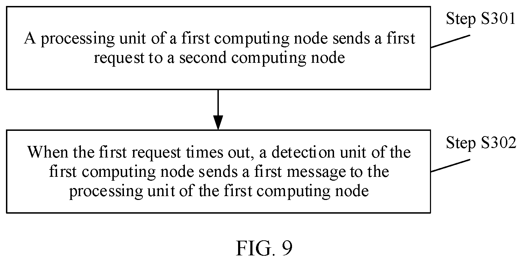

FIG. 9 is a flowchart of a long-latency request processing method according to an embodiment of this application. The method is applied to the distributed cluster system in FIG. 3, the distributed cluster system includes a plurality of computing nodes, and each of the plurality of computing nodes includes a processing unit and a detection unit. The method may include step 301 and step S302. Detailed descriptions are as follows:
Step S301: A processing unit of a first computing node sends a first request to a second computing node.

Specifically, the first computing node and the second computing node are any two of the plurality of computing nodes.

Step S302: When the first request times out, a detection unit of the first computing node sends a first message to the processing unit of the first computing node.

Specifically, the first message includes one or more of long-latency timeout information and blocked path information. When a first response time of the second computing node to the first request is greater than a first threshold, the first request times out. The first threshold is determined based on a plurality of response times, and the plurality of response times are respectively response times of the second computing node to a plurality of requests that have been sent by the first computing node.

In some embodiments, sending the first request to the second computing node includes: sending the first request to the second computing node using a first thread. The method further includes: The processing unit of the first computing node receives the first message, and suspends the first thread.

In some embodiments, that the first request times out when the first response time of the second computing node to the first request is greater than the first threshold includes: After the first computing node sends the first request, the detection unit of the first computing node monitors a receiving moment of a first response, where the first response is sent by the second computing node to the first computing node for the first request; and when a difference between a second moment and a first moment is greater than the first threshold, determines that the first request times out, where the first moment is a moment at which the first request is sent, the second moment is any moment after the first moment and before the receiving moment, and the difference between the second moment and the first moment is less than or equal to the first response time.

In some embodiments, the method further includes: The detection unit of the first computing node determines a difference between the receiving moment and the first moment as the first response time, and updates the first threshold based on the first response time.

In some embodiments, updating the first threshold based on the first response time includes: when the first response time is greater than a preset value, decreasing the first threshold, where the preset value is determined based on the first threshold that is not updated; and when the first response time is less than or equal to the preset value, increasing the first threshold.

In some embodiments, the method further includes: After receiving the first response, the processing unit of the first computing node stores, in the first computing node, first data included in the first response; and when re-running the first thread, reads the first data from the first computing node.

In embodiments of this application, from the moment at which the processing unit of the first computing node sends the first request, the detection unit starts to monitor the receiving moment of the response. When the response time of the first request exceeds a normal response time (namely, the first threshold) of the second computing node, it may be determined that the first request times out, and the detection unit may actively send the first message to the processing unit of the first computing node, to notify the processing unit that the path is blocked and the second computing node cannot quickly respond to the request. Further, the processing unit of the first computing node may first switch to another thread to process another task. This prevents the first computing node from being in a waiting state for a long time because the processing unit of the first computing node cannot sense whether the request times out, and from seriously wasting computing resources of the first computing node. Therefore, utilization of the computing node is improved.

This application provides a computer storage medium. The computer storage medium stores a computer program, and when the computer program is executed by a processor, any implementation of the long-latency request processing method is implemented.

An embodiment of this application provides an electronic device. The electronic device includes a processor, and the processor is configured to support the electronic device in implementing a corresponding function in any implementation of the long-latency request processing method. The electronic device may further include a memory. The memory is configured to be coupled to the processor, and the memory stores program instructions and data that are necessary for the electronic device. The electronic device may further include a communication interface, used for communication between the electronic device and another device or a communication network.

This application provides a chip system. The chip system includes a processor, configured to support an electronic device in implementing the foregoing functions, for example, generating or processing information in the long-latency request processing method. In a possible design, the chip system further includes a memory, and the memory is configured to store program instructions and data that are necessary for the electronic device. The chip system may include a chip, or may include a chip and another discrete component.

This application provides a computer program. The computer program includes instructions, and when the computer program is executed by a computer, the computer is enabled to perform the long-latency request processing method.

In the foregoing embodiments, descriptions of embodiments have respective focuses. For a part that is not described in detail in an embodiment, refer to related descriptions in other embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to preferred embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like, and may specifically be a processor in the computer device) to perform all or some of the steps of the methods described in embodiments of this application. The foregoing storage medium may include any medium that can store program code, for example, a USB flash drive, a removable hard disk, a magnetic disk, an optical disc, a read-only memory (read-only memory, ROM for short), or a random access memory (random access memory, RAM for short).

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the spirit and scope of the technical solutions of embodiments of this application.

## Claims

1. A distributed cluster system, wherein the distributed cluster system comprises a plurality of computing nodes, and each of the plurality of computing nodes comprises a processing unit and a detection unit;
a processing unit of a first computing node is configured to:
send a first request to a second computing node, wherein the first computing node and the second computing node are any two of the plurality of computing nodes;
a detection unit of the first computing node is configured to:
when the first request times out, send a first message to the processing unit of the first computing node, wherein the first message comprises one or more of long-latency timeout information and blocked path information; and
when a first response time of the second computing node to the first request is greater than a first threshold, the first request times out, wherein the first threshold is determined based on a plurality of response times, and the plurality of response times are respectively response times of the second computing node to a plurality of requests that have been sent by the first computing node.

2. The system according to claim 1, wherein the processing unit of the first computing node is specifically configured to send the first request to the second computing node using a first thread; and
the processing unit of the first computing node is further configured to receive the first message, and suspend the first thread.

3. The system according to claim 1 or 2, wherein the detection unit of the first computing node is specifically configured to:
after the first computing node sends the first request, monitor a receiving moment of a first response, wherein the first response is sent by the second computing node to the first computing node for the first request; and
when a difference between a second moment and a first moment is greater than the first threshold, determine that the first request times out, wherein the first moment is a moment at which the first request is sent, the second moment is any moment after the first moment and before the receiving moment, and the difference between the second moment and the first moment is less than or equal to the first response time.

4. The system according to claim 3, wherein the detection unit of the first computing node is further configured to:
determine a difference between the receiving moment and the first moment as the first response time, and update the first threshold based on the first response time.

5. The system according to claim 4, wherein the detection unit of the first computing node is specifically configured to:
when the first response time is greater than a preset value, decrease the first threshold, wherein the preset value is determined based on the first threshold that is not updated; and
when the first response time is less than or equal to the preset value, increase the first threshold.

6. The system according to any one of claims 3 to 5, wherein the processing unit of the first computing node is further configured to: after receiving the first response, store, in the first computing node, first data comprised in the first response; and
the processing unit of the first computing node is further configured to: when re-running the first thread, read the first data from the first computing node.

7. A long-latency request processing method, applied to a distributed cluster system, wherein the distributed cluster system comprises a plurality of computing nodes, each of the plurality of computing nodes comprises a processing unit and a detection unit, and the method comprises:
sending, by a processing unit of a first computing node, a first request to a second computing node, wherein the first computing node and the second computing node are any two of the plurality of computing nodes; and
when the first request times out, sending, by a detection unit of the first computing node, a first message to the processing unit of the first computing node, wherein the first message comprises one or more of long-latency timeout information and blocked path information, wherein
when a first response time of the second computing node to the first request is greater than a first threshold, the first request times out, wherein the first threshold is determined based on a plurality of response times, and the plurality of response times are respectively response times of the second computing node to a plurality of requests that have been sent by the first computing node.

8. The method according to claim 7, wherein sending the first request to the second computing node comprises: sending the first request to the second computing node using a first thread; and
the method further comprises: receiving, by the processing unit of the first computing node, the first message, and suspending the first thread.

9. The method according to claim 7 or 8, wherein that the first request times out when the first response time of the second computing node to the first request is greater than the first threshold comprises:
after the first computing node sends the first request, monitoring, by the detection unit of the first computing node, a receiving moment of a first response, wherein the first response is sent by the second computing node to the first computing node for the first request; and
when a difference between a second moment and a first moment is greater than the first threshold, determining that the first request times out, wherein the first moment is a moment at which the first request is sent, the second moment is any moment after the first moment and before the receiving moment, and the difference between the second moment and the first moment is less than or equal to the first response time.

10. The method according to claim 9, wherein the method further comprises:
determining, by the detection unit of the first computing node, a difference between the receiving moment and the first moment as the first response time, and updating the first threshold based on the first response time.

11. The system according to claim 10, wherein updating the first threshold based on the first response time comprises:
when the first response time is greater than a preset value, decreasing the first threshold, wherein the preset value is determined based on the first threshold that is not updated; and
when the first response time is less than or equal to the preset value, increasing the first threshold.

12. The method according to any one of claims 9 to 11, wherein the method further comprises:
after receiving the first response, storing, by the processing unit of the first computing node in the first computing node, first data comprised in the first response; and
when re-running the first thread, reading the first data from the first computing node.

13. A computer storage medium, wherein the computer storage medium stores a computer program, and when the computer program is executed by a processor, the method according to any one of claims 7 to 12 is implemented.
